# EUROPÄISCHE PATENTANMELDUNG

(11) **EP 4 474 671 A1**
(43) Veröffentlichungstag der Anmeldung: **11.12.2024**
(21) Anmeldenummer: 24174498.6
(22) Anmeldetag: 07.05.2024
(51) Int. Cl.: F16F 9/05, F16F 9/32, G01L 1/16, G01L 5/00, B61F 5/10

(54) **LUFTFEDER, INSBESONDERE FÜR STRASSENFAHRZEUGE UND/ODER FÜR SCHIENENFAHRZEUGE**

(30) Priorität: 08.06.2023 DE 102023205349
(71) Anmelder: ContiTech Deutschland GmbH, 30175 Hannover (DE)
(72) Erfinder: Reck, Dr. Siegfried, 30175 Hannover (DE)
(74) Vertreter: Continental Corporation

(57) **Zusammenfassung**

Die Erfindung betrifft eine Luftfeder (1), insbesondere für Straßenfahrzeuge und/oder für Schienenfahrzeuge, mindestens aufweisend mindestens ein erstes Kontaktelement (12) und mindestens ein zweites Kontaktelement (14), welche ausgebildet sind, einander kontaktieren zu können. Die Luftfeder (1) ist gekennzeichnet durch einen Signalgeber (15), welcher zwischen einem Kolben (10) und dem ersten Kontaktelement (12) angeordnet und ausgebildet ist, bei Kontakt zwischen dem ersten Kontaktelement (12) und dem zweiten Kontaktelement (14) ein Signal, vorzugsweise drahtlos, auszusenden.

## Beschreibung

Die Erfindung betrifft eine Luftfeder, insbesondere für Straßenfahrzeuge und bzw. oder für Schienenfahrzeuge, gemäß des Patentanspruchs 1 sowie ein Fahrzeug mit wenigstens einer derartigen Luftfeder gemäß des Patentanspruchs 7.

Zur Dämpfung von Schwingungen können je nach Anwendung verschiedene Arten von Federungssysteme eingesetzt werden. Hierzu gehören auch die Luftfederungen, welche die Kompressibilität von Gasen und insbesondere von Luft ausnutzen.

Eine weit verbreitete Bauart einer Luftfederung sind Luftfedern mit konstantem Volumen in Regellage. In diesem Fall wird die Luft üblicherweise in einem Rollbalg eingeschlossen, welcher mit weiteren Beschlagteilen wie bei Straßenfahrzeugen mit einem Deckel oder einer Bördelplatte und einem Abrollkolben luftdicht verbunden ist. Dabei ist der Kolben sowohl mit dem unteren Ende des Rollbalgs verbunden als auch üblicherweise mit einer Achse bei Straßenfahrzeugen bzw. mit einem Fahrgestell bei Schienenfahrzeugen. Das obere Ende des Rollbalgs ist mit einem Deckel oder einer Bördelplatte verbunden, welche mit der Karosserie bzw. mit dem Chassis des Fahrzeugs verbunden ist. Bei Schienenfahrzeugen wird der Balg zwischen einer Gleitplatte oben und dem Kolben unten angeordnet.

Der Rollbalg ist über den Kolben gestülpt und rollt unter Druck auf diesem ab. Die Luftfeder kann durch einen Kompressor mit Druckluft versorgt werden, so dass in Abhängigkeit von der Beladung Luft zu- oder abgepumpt werden kann, um das Füllvolumen und somit die Niveaulage des Fahrzeugs konstant zu halten.

Derartige Luftfedern werden bei verschiedenen Arten von Fahrzeugen wie insbesondere bei Straßenfahrzeugen wie insbesondere Lastkraftwagen, Anhänger und Omnibusse sowie Schienenfahrzeugen eingesetzt.

Bei Straßenfahrzeugen wird üblicherweise im Inneren der Luftfeder und von dem Rollbalg, der Bördelplatte und dem Kolben umschlossen ein Puffer befestigt, der sicherstellen soll, dass im Betrieb des Luftfedersystems ohne Luftdruck oder bei Überbeanspruchung der Kolben nicht gegen die Bördelplatte schlägt. Hierzu wird der Puffer üblicherweise senkrecht wirkend zwischen Bördelplatte und Kolben auf dem Kolben angeordnet, wobei auch eine Anordnung auf der Bördelplatte möglich ist. Der Puffer besteht üblicherweise aus Gummi oder aus Plastik.

In Schienenfahrzeugen gibt es unterschiedliche Bauformen wie Gürtelbälge oder Halbrollbälge. Auch hier wird eine Gummifeder, die sogenannte Notfeder, verwendet, auf welcher die Gleitplatte im Betrieb des Luftfedersystems ohne Luftdruck oder bei Überbeanspruchung aufsetzen kann, um bei Ausfall der Luftfederung noch eine gewisse Federwirkung zu gewährleisten. Die Gummifeder wird üblicherweise auf dem Kolben angeordnet, wobei auch eine Anordnung auf der Gleitplatte möglich ist; in diesem Fall wird die Gleitfläche der Gleitplatte von der Gummifeder gebildet. Die Notfeder kann statt als Gummifeder aus Gummi auch aus Plastik ausgebildet sein.

Im Normalbetrieb ist aufgrund von Luftüberdruck in der Luftfeder ein Abstand zwischen der Bördelplatte bzw. der Gleitplatte und dem Puffer bzw. der Notfeder gegeben, der zur Abfederung eines Chassis eines Fahrzeuges gegen beispielsweise eine Achse oder, wie bei Schienenfahrzeugen, gegen das Drehgestell genutzt wird.

Ist kein Überdruck in der Luftfeder vorhanden oder ist dieser zu gering, setzt die Bördelplatte bzw. die Gleitplatte auf dem Puffer bzw. auf der Notfeder auf. Auf diese Weise ist eine Notfederung gewährleistet, die auch Querbewegungen der Bördelplatte relativ zum Puffer bzw. der Gleitplatte relativ zur Notfeder zulässt.

Die DE 10 2008 037 484 A1 zeigt eine derartige Luftfeder. Zur Verbesserung der Gleitfähigkeit weist die Notfeder eine ebenfalls als Gleitfläche ausgebildete Oberfläche auf. Außerdem wird vorgeschlagen, dass die Oberfläche der Gleitflächen Vertiefungen zur Aufnahme von Schmiermitteln vorsehen. Alle diese Maßnahmen dienen zur Verbesserung des Gleitverhaltens und der Minimierung des Verschleißes der Gleitflächen.

Es ist jedoch nicht vermeidbar, dass auch im normalen Einsatz die Bördelplatte bzw. die Gleichplatte mit dem Puffer bzw. mit der Notfeder in Kontakt kommt, beispielsweise bei der Wartung in der Werkstatt bzw. im Depot, wo kein entsprechender Luftdruck zur Verfügung steht, oder aber auch im Fall von Defekten der Luftfeder oder Druckluftversorgung.

Dieser Kontakt zwischen Bördelplatte und Puffer bzw. zwischen Gleitplatte und Notfeder ist zwangsweise auch mit Verschleiß verbunden. Wird der Verschleiß der Gleitflächen des Puffers bzw. der Notfeder zu groß, kann es in ungünstigen Fällen zu Unfällen im Betrieb kommen. Deshalb ist eine Überwachung des Verschleißes notwendig.

Da jedoch die Innenseite der Bördelplatte und der Puffer bzw. die Gleitplatte und die Notfeder im Inneren der Luftfeder angeordnet sind, ist eine Verschleißüberwachung nur mit großem Aufwand, beispielsweise durch die Demontage der Luftfeder, möglich.

Die WO/2019007600 A1 beschreibt eine Luftfeder, insbesondere für Straßenfahrzeuge und bzw. oder für Schienenfahrzeuge, mindestens aufweisend mindestens ein erstes Kontaktelement und mindestens ein zweites Kontaktelement, welche ausgebildet sind, einander kontaktieren zu können. In dem ersten Kontaktelement ist mindestens ein erster Transponder eingebettet, der von der dem zweiten Kontaktelement zugewandten Oberfläche des ersten Kontaktelements um ein erstes vorbestimmtes Maß beabstandet ist, oder umgekehrt.

Ein derartiger Transponder ist mittels eines an sich bekannten Lesegerätes zu einer Signalabgabe anregbar, welches von einem Lesegerät erfassbar ist. Dabei ist lediglich das Vorhandensein des Transponders von Interesse. Steigt der Verschleiß des ersten Kontaktelements über das vorbestimmte Maß, wird dadurch auch der erste Transponder abgerieben und dabei zerstört. Eine entsprechende Abfrage mit dem Lesegerät ergäbe dann keine Rückmeldung, so dass sofort erkennbar ist, dass der Verschleiß das vorbestimmte Maß des ersten Transponders erreicht oder überschritten hat.

Ein Anwender einer derartigen erfindungsgemäßen Luftfeder kann somit ohne Demontage der Luftfeder sowie ohne diese aus dem Fahrzeug auszubauen durch das Auslesen von außen überprüfen, ob der erste Transponder noch erkannt werden kann oder nicht, was als Defekt bzw. als unzulässiger Verschleiß gewertet werden kann. Dies kann die Wartung vereinfachen sowie Wartungs- und Standzeiten reduzieren. Auch kann dies die Sicherheit der Verwendung der Luftfeder erhöhen.

Nachteilig hierbei ist, dass der Anwender aktiv werden muss, um zu überprüfen, ob der erste Transponder noch vorhanden ist oder nicht. Dies stellt einen Aufwand für den Benutzer dar.

Nachteilig ist auch, dass lediglich zwischen einem noch vorhandenen oder nicht mehr vorhandenen ersten Transponder unterschieden werden kann. Dies stellt eine vergleichsweise grobe Beurteilung dar, ob ein Defekt bzw. ein unzulässiger Verschleiß vorliegt oder nicht.

Nachteilig ist ferner, dass auf diese Art und Weise keinerlei Informationen über einen sich anbahnenden Defekt bzw. über einen fortschreitenden Verschleiß gewonnen werden können. Insbesondere lässt sich auf diese Art und Weise gar nicht erfassen, wann bzw. wie viele Kontakte zwischen Bördelplatte und Puffer bzw. zwischen Gleitplatte und Notfeder aufgetreten sind.

Der Erfindung liegt die Aufgabe zugrunde, eine Luftfeder der eingangs beschriebenen Art so zu verbessern, dass ein unzulässiger Verschleiß im Inneren der Luftfeder ohne Demontage der Luftfeder von außen einfacher, schneller, verlässlicher und bzw. oder kostengünstiger erfasst werden kann als bisher bekannt. Zumindest soll eine Alternative zu den bekannten Möglichkeiten geschaffen werden.

Die Aufgabe wird erfindungsgemäß durch eine Luftfeder mit den Merkmalen gemäß Patentanspruch 1 sowie durch ein Fahrzeug mit den Merkmalen des Patentanspruchs 7 gelöst. Vorteilhafte Weiterbildungen sind in den Unteransprüchen beschrieben.

Somit betrifft die vorliegende Erfindung eine Luftfeder, insbesondere für Straßenfahrzeuge und bzw. oder für Schienenfahrzeuge, mindestens aufweisend mindestens ein erstes Kontaktelement und mindestens ein zweites Kontaktelement, welche ausgebildet sind, einander kontaktieren zu können, wie eingangs beschrieben.

Die erfindungsgemäße Luftfeder ist gekennzeichnet durch einen Signalgeber, welcher zwischen einem Kolben und dem ersten Kontaktelement angeordnet und ausgebildet ist, bei Kontakt zwischen dem ersten Kontaktelement und dem zweiten Kontaktelement ein Signal, vorzugsweise drahtlos, auszusenden.

Das entsprechende Signal kann, beispielsweise von einer Steuerungseinheit des jeweiligen Fahrzeugs empfangen werden, so dass dort die Anzahl der unerwünschten Kontakte der beiden Kontaktelement erfasst und verfolgt werden kann. Beispielsweise können die unerwünschten Kontakte gezählt und bei Überschreiten einer vorbestimmten Anzahl unerwünschter Kontakt auf einen unerwünscht hohen Verschleiß des Puffers bzw. der Gleitplatte geschlossen werden, um dann den Austausch des Puffers bzw. der Gleitplatte vornehmen oder zumindest planen zu können. Dies kann ggfs. in mehrere Anzahlen unterschieden werden, um eine unterschiedlich hohe Dringlichkeit eines Austausches erkennen zu können.

In jedem Fall kann auf zusätzliche Maßnahmen eines Anwenders wie beispielsweise eine Abfrage mit einem Lesegerät verzichtet werden. Vielmehr kann der Signalgeber selbsttätig arbeiten und Signale aussenden, welche kontinuierlich empfangen werden können.

Ein Anwender einer derartigen erfindungsgemäßen Luftfeder kann somit ohne Demontage der Luftfeder sowie ohne diese aus dem Fahrzeug auszubauen durch das Empfangen der Signale des Signalgebers von außen überprüfen, ob ein Defekt bzw. ein unzulässiger Verschleiß vorliegt oder nicht. Dies kann aufgrund der Zählung der Signale auch qualitativ bewertet bzw. zumindest abgeschätzt werden. Dies kann die Wartung vereinfachen sowie Wartungs- und Standzeiten reduzieren. Auch kann dies die Sicherheit der Verwendung der Luftfeder erhöhen. Insbesondere kann eine Wartung vorausgeplant werden.

Gemäß einem Aspekt der Erfindung weist der Signalgeber einen piezo-elektrischen Generator auf, welcher ausgebildet ist, bei Kontakt zwischen dem ersten Kontaktelement und dem zweiten Kontaktelement aufgrund einer hierdurch erzeugten Kraft einen Spannungsimpuls zu erzeugen, wobei der Signalgeber ferner einen Energiewandler aufweist, welcher ausgebildet ist, mittels des Spannungsimpuls des piezo-elektrischen Generators betrieben zu werden und hierdurch das Aussenden des Signals zu veranlassen. Dies kann eine Möglichkeit der Umsetzung darstellen. Insbesondere kann hierdurch eine energieautarke Umsetzung erfolgen, so dass der Kontakt die für die Erzeugung des Signals erforderliche Energie erzeugen und hierdurch das Aussenden des Signals gleichzeitig veranlassen kann.

Gemäß einem weiteren Aspekt der Erfindung ist der piezo-elektrischen Generator derart ausgebildet, so dass die Amplitude des Spannungsimpulses, vorzugsweise zumindest im Wesentlichen linear, von der erzeugten Kraft abhängt. Dies kann eine Möglichkeit der Umsetzung darstellen.

Gemäß einem weiteren Aspekt der Erfindung weist der Signalgeber einen, vorzugsweise drahtlosen, Sender auf, welcher ausgebildet ist, das Signal, vorzugsweise drahtlos, auszusenden. Dies kann die bereits erwähnte drahtlose Signalaussendung konkret ermöglichen.

Gemäß einem weiteren Aspekt der vorliegenden Erfindung sind das erste Kontaktelement ein Puffer und das zweite Kontaktelement eine Bördelplatte der Luftfeder. Dies kann die Umsetzung der vorliegenden Erfindung auf Luftfedern für Straßenfahrzeuge begünstigen.

Gemäß einem weiteren Aspekt der vorliegenden Erfindung sind das erste Kontaktelement eine Notfeder und das zweite Kontaktelement eine Gleitplatte der Luftfeder. Dies kann die Umsetzung der vorliegenden Erfindung auf Luftfedern für Schienenfahrzeuge begünstigen.

Die vorliegende Erfindung betrifft auch ein Fahrzeug, vorzugsweise ein Straßenfahrzeug oder ein Schienenfahrzeug, mit wenigstens einer Luftfeder wie zuvor beschrieben, wobei die Luftfeder mindestens ein erstes Kontaktelement und mindestens ein zweites Kontaktelement aufweist, welche ausgebildet sind, einander kontaktieren zu können, gekennzeichnet durch einen Signalgeber, welcher zwischen einem Kolben und dem ersten Kontaktelement angeordnet und ausgebildet ist, bei Kontakt zwischen dem ersten Kontaktelement und dem zweiten Kontaktelement ein Signal, vorzugsweise drahtlos, auszusenden. Dies kann die Umsetzung und Nutzung von erfindungsgemäßen Luftfedern bei Fahrzeugen wie insbesondere bei Straßenfahrzeugen und bzw. oder bei Schienenfahrzeugen ermöglichen.

Mit anderen Worten werden insbesondere Luftfedern in Nutzfahrzeugen und Bussen mit elastomeren Anschlagpuffern ausgestattet, um sporadisch auftretende, hohe dynamische Belastungen (Stöße) abzufedern, wie sie z. B. durch extreme Unebenheiten der Fahrbahn (Schlaglöcher, Rüttelschwellen) hervorgerufen werden.

Fahrzeuge im Liniendienst überfahren Unebenheiten der Fahrbahn regelmäßig, so dass die Anschlagpuffer unverhältnismäßig häufig beansprucht werden und dadurch vorzeitig ausfallen. Die übermäßige Belastung der Anschlagpuffer wird erst offenbar, wenn der Puffer zerstört ist und Schäden an der Luftfeder auftreten. Der notwendige Ersatz des Anschlagpuffers und ggf. der Luftfeder verursacht hohe Kosten.

Die erfinderische Aufgabe kann somit darin bestehen, eine Elektronik in den Puffer zu integrieren, die jeden Puffereingriff erfasst und meldet, so dass anhand ihrer Häufigkeit der Austausch der Puffer geplant werden kann. Dieses Gerät sollte vorzugsweise energie-autark arbeiten und bzw. oder den Zählerstand drahtlos kommunizieren.

Erfindungsgemäß kann somit eine Luftfeder an einem der beiden Enden mit einem Puffer ausgestattet sein. Zwischen dem Boden des Puffers und seiner Auflage kann sich ein piezo-elektrischer Generator befinden. Wird der Puffer durch eine impulshaft wirkende Kraft belastet, entsteht an dem piezo-elektrischen Generator ein bipolarer Spannungsimpuls, dessen Amplitude von der wirksamen Kraft abhängig ist. Der piezo-elektrische Generator besteht vorzugsweise aus einer Anzahl von Piezo-Folien, die übereinander angeordnet und in Reihe geschaltet werden, um die notwendige Leistung bereitzustellen.

Eine entsprechende elektronische Schaltung kann derart aussehen, dass ein Energy-Manager die Energie der positiven Halbwelle des Spannungsimpulses nutzt und hieraus temporär eine Gleichspannung für den Betrieb eines Melders erzeugt. Der Energy-Manager kann einen Gleichrichter, einen kapazitiven Energiespeicher, einen Spannungsbegrenzer und einen integrierten Gleichspannungswandler enthalten.

Die Spannung der negativen Halbwelle kann einen foto-elektrischer Schalter aktivieren, der dem Melder signalisiert, dass auf den Puffer eine Kraft wirkt. Der Melder kann dieses Ereignis über eine Funkschnittstelle (BlueTooth LE, UHF-Transponder) an einen Empfänger (hier nicht dargestellt) in der näheren Umgebung, z. B. in dem luftgefederten Fahrzeug, übermitteln. Zum Empfang und zur Auswertung der Zähl-Ereignisse kann ein handelsübliches Smart-Phone verwendet werden, auf dem eine entsprechende Applikations-Software läuft.

Zwei Ausführungsbeispiele und weitere Vorteile der Erfindung werden nachstehend im Zusammenhang mit den folgenden Figuren erläutert. Darin zeigt:
- Fig. 1: eine schematische Schnittdarstellung einer erfindungsgemäßen Luftfeder gemäß eines ersten Ausführungsbeispiels;
- Fig. 2: ein schematisches Schaltbild eines Signalsgebers der erfindungsgemäßen Luftfeder gemäß des ersten Ausführungsbeispiels; und
- Fig. 3: eine schematische Schnittdarstellung einer erfindungsgemäßen Luftfeder gemäß eines zweiten Ausführungsbeispiels.

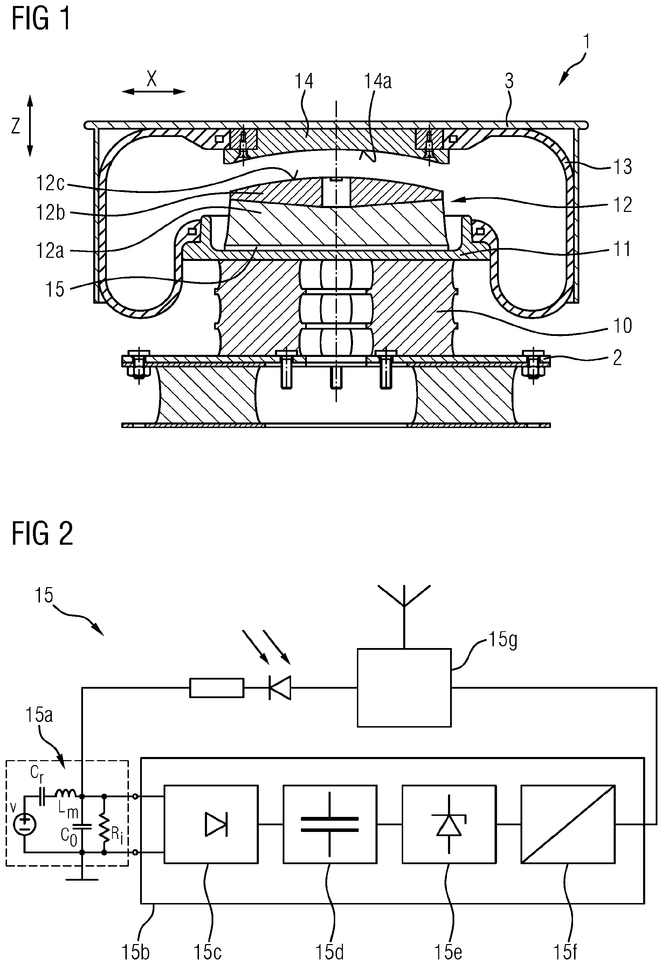

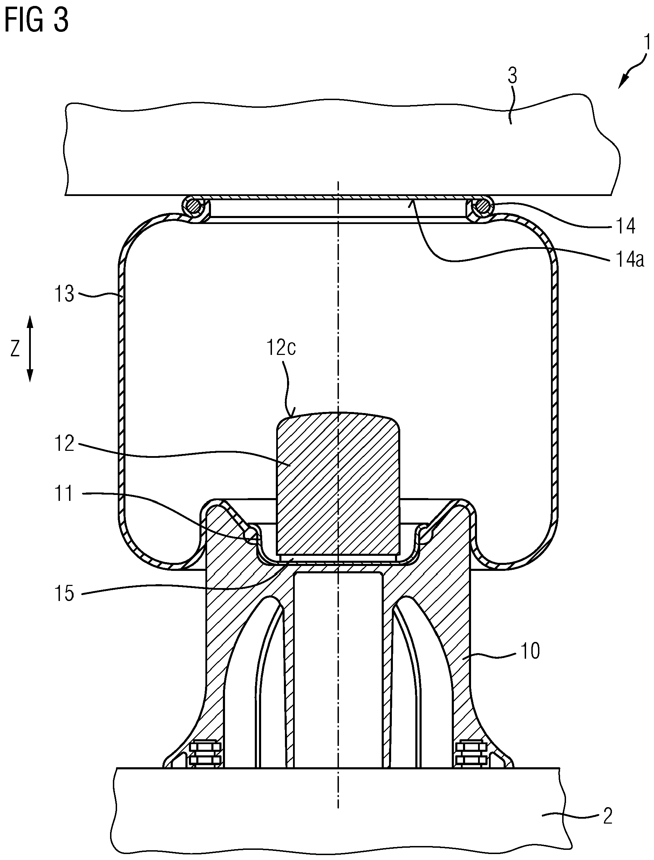

Die Beschreibung der Figuren 1 und 3 erfolgt in kartesischen Koordinaten mit einer Längsrichtung X, einer zur Längsrichtung X senkrecht ausgerichteten Querrichtung (nicht dargestellt) sowie einer sowohl zur Längsrichtung X als auch zur Querrichtung senkrecht ausgerichteten vertikalen Richtung Z. Die Längsrichtung X kann auch als Tiefe X, die Querrichtung auch als Breite und die vertikale Richtung Z auch als Höhe Z bezeichnet werden. Die Längsrichtung X und die Querrichtung bilden gemeinsam die Horizontale, welche auch als horizontale Ebene bezeichnet werden kann. Die Längsrichtung X, die Querrichtung und die vertikale Richtung Z können gemeinsam auch als Raumrichtungen X, Z bzw. als kartesische Raumrichtungen X, Z bezeichnet werden.

Fig. 1 zeigt eine schematische Schnittdarstellung einer erfindungsgemäßen Luftfeder 1 gemäß eines ersten Ausführungsbeispiels. Fig. 2 zeigt ein schematisches Schaltbild eines Signalsgebers 15 der erfindungsgemäßen Luftfeder 1 gemäß des ersten Ausführungsbeispiels. Betrachtet wird hierbei eine Luftfeder 1 für Schienenfahrzeuge. Die Luftfeder 1 kann auch als Luftfedereinrichtung 1 bezeichnet werden.

Die Luftfeder 1 weist einen Kolben 10 auf, welcher auf einem Fahrgestell 2 eines Fahrzeugs wie in diesem Ausführungsbeispiels eines Schienenfahrzeugs befestigt ist. Auf dem Kolben 10 ist eine Halterung 11 angeordnet, welche radial außenseitig einen Balg 13 an dessen unterem Ende hält. Die Halterung 11 kann daher auch als Kragen 11 bezeichnet werden. An seinem oberen Ende wird der Balg 13 in diesem Ausführungsbeispiel von einer Gleitplatte 14 gehalten, welche mit einer Karosserie 3 des Fahrzeugs verbunden ist.

Innerhalb des Volumens der Luftfeder 1, welches zumindest im Wesentlichen von dem Balg 13, der Halterung 11 und der Gleitplatte 14 eingeschlossen wird, ist oben auf der Halterung 11 eine Notfeder 12 angeordnet. Die Notfeder 12 weist eine Gummifeder 12a und ein Gleitelement 12b auf, welche sich in dieser Reihenfolge von der Halterung 11 in der Höhe Z nach oben erstrecken. Das Gleitelement 12b weist eine Oberfläche 12c in Form einer Gleitfläche 12c auf, welche in der Höhe Z nach oben gerichtet ist.

Ferner weist die Gleitplatte 14 eine Oberfläche 14a in Form einer Gleitfläche 14a auf, welcher der Oberfläche 12c der Notfeder 12 zugewandt ist und sich ebenfalls innerhalb des Volumens der Luftfeder 1 befindet.

Setzt die Gleitplatte 14 auf der Notfeder 12 auf, so kommen die Gleitfläche 14a der Gleitplatte 14 und die Gleitfläche 12c der Notfeder 12 in Kontakt, weshalb die Notfeder 12 auch als erstes Kontaktelement 12 und die Gleitplatte 14 auch als zweites Kontaktelement 14 bezeichnet werden können. Zwar ist dieser Kontakt in gewissen Situationen gewünscht, jedoch kann der Kontakt zu einem Abrieb wenigstens einer der beiden Gleitflächen 14a, 12c führen, welcher bisher lediglich durch die Inspektion dieser Gleitflächen 14a, 12c erkannt werden kann. Dies erfordert die Demontage der Luftfeder 1, um die beiden Gleitflächen 14a, 12c in Inneren des Balges 13 zugänglich zu machen.

Um die Demontage zu vermeiden sowie um die Überprüfung der Abnutzung wenigstens einer der beiden Gleitflächen 14a, 12c zu verbessern, ist in dem vorliegenden Ausführungsbeispiel zwischen dem Kolben 10 und dem ersten Kontaktelement 12 ein Signalgeber 15 angeordnet und ausgebildet, bei Kontakt zwischen dem ersten Kontaktelement 12 und dem zweiten Kontaktelement 14 ein Signal, vorzugsweise drahtlos, auszusenden.

Der Signalgeber 15 weist einen piezo-elektrischen Generator 15a auf, welcher ausgebildet ist, bei dem Kontakt zwischen dem ersten Kontaktelement 12 und dem zweiten Kontaktelement 14 aufgrund einer hierdurch erzeugten Kraft einen Spannungsimpuls zu erzeugen, wobei der Signalgeber 15 ferner einen Energiewandler 15b aufweist, welcher ausgebildet ist, mittels des Spannungsimpuls des piezo-elektrischen Generators 15a betrieben zu werden und hierdurch das Aussenden des Signals zu veranlassen. Das Aussenden erfolgt mittels eines Senders 15g drahtlos. Der Energiewandler 15b weist einen Gleichrichter 15c, einen kapazitiven Energiespeicher 15d, einen Spannungsbegrenzer 15e sowie einen Gleichspannungswandler 15f auf.

Die ausgesendeten Signale können beispielsweise seitens der Steuerungseinheit des entsprechenden Fahrzeugs empfangen und gezählt werden, um auf die Abnutzung des ersten Kontaktelements 12 zu schließen und dessen Austausch zu planen.

Fig. 3 zeigt eine schematische Schnittdarstellung einer erfindungsgemäßen Luftfeder 1 gemäß eines zweiten Ausführungsbeispiels. Die Luftfeder 1 des zweiten Ausführungsbeispiels ist zur Verwendung bei einem Straßenfahrzeug ausgebildet. Das erste Kontaktelement 12 stellt somit einen Puffer 12 und das zweite Kontaktelement 14 eine Bördelplatte 14 dar, wie eingangs erläutert.

Auch in dieser Anordnung können die zuvor beschriebenen erfindungsgemäßen Funktionen realisiert werden.

### Bezugszeichenliste (Teil der Beschreibung)

- X: Längsrichtung; Tiefe
- Z: vertikale Richtung; Höhe

- 1: Luftfeder; Luftfedereinrichtung
- 10: Kolben
- 11: Halterung; Kragen
- 12: erstes Kontaktelement; Notfeder; Puffer
- 12a: Gummifeder
- 12b: Gleitelement
- 12c: Gleitfläche bzw. Oberfläche des ersten Kontaktelements 12
- 13: Balg
- 14: zweites Kontaktelement; Gleitplatte; Bördelplatte
- 14a: Gleitfläche bzw. Oberfläche des zweiten Kontaktelements 14
- 15: Signalgeber
- 15a: piezo-elektrischer Generator
- 15b: Energiewandler
- 15c: Gleichrichter
- 15d: kapazitiver Energiespeicher
- 15e: Spannungsbegrenzer
- 15f: Gleichspannungswandler
- 15g: (drahtloser) Sender

- 2: Fahrgestell; Achse

- 3: Karosserie; Chassis

## Patentansprüche

1. Luftfeder (1), insbesondere für Straßenfahrzeuge und/oder für Schienenfahrzeuge, mindestens aufweisend
mindestens ein erstes Kontaktelement (12) und
mindestens ein zweites Kontaktelement (14),
welche ausgebildet sind, einander kontaktieren zu können,
**gekennzeichnet durch**
einen Signalgeber (15), welcher zwischen einem Kolben (10) und dem ersten Kontaktelement (12) angeordnet und ausgebildet ist, bei Kontakt zwischen dem ersten Kontaktelement (12) und dem zweiten Kontaktelement (14) ein Signal, vorzugsweise drahtlos, auszusenden.

2. Luftfeder (1) nach Anspruch 1,
wobei der Signalgeber (15) einen piezo-elektrischen Generator (15a) aufweist, welcher ausgebildet ist, bei Kontakt zwischen dem ersten Kontaktelement (12) und dem zweiten Kontaktelement (14) aufgrund einer hierdurch erzeugten Kraft einen Spannungsimpuls zu erzeugen,
wobei der Signalgeber (15) ferner einen Energiewandler (15b) aufweist, welcher ausgebildet ist, mittels des Spannungsimpuls des piezo-elektrischen Generators (15a) betrieben zu werden und hierdurch das Aussenden des Signals zu veranlassen.

3. Luftfeder (1) nach Anspruch 2,
wobei der piezo-elektrischen Generator (15a) derart ausgebildet ist, so dass die Amplitude des Spannungsimpulses, vorzugsweise zumindest im Wesentlichen linear, von der erzeugten Kraft abhängt.

4. Luftfeder (1) nach einem der vorangehenden Ansprüche,
wobei der Signalgeber (15) einen, vorzugsweise drahtlosen, Sender (15g) aufweist, welcher ausgebildet ist, das Signal, vorzugsweise drahtlos, auszusenden.

5. Luftfeder (1) nach einem der vorangehenden Ansprüche,
wobei das erste Kontaktelement (12) ein Puffer (12) und das zweite Kontaktelement (14) eine Bördelplatte (14) der Luftfeder (1) ist.

6. Luftfeder (1) nach einem der Ansprüche 1 bis 4,
wobei das erste Kontaktelement (12) eine Notfeder (12) und das zweite Kontaktelement (14) eine Gleitplatte (14) der Luftfeder (1) ist.

7. Fahrzeug, vorzugsweise Straßenfahrzeug oder Schienenfahrzeug,
mit wenigstens einer Luftfeder (1) nach einem der vorangehenden Ansprüche,
wobei die Luftfeder (1) mindestens ein erstes Kontaktelement (12) und mindestens ein zweites Kontaktelement (14) aufweist, welche ausgebildet sind, einander kontaktieren zu können,
**gekennzeichnet durch**
einen Signalgeber (15), welcher zwischen einem Kolben (10) und dem ersten Kontaktelement (12) angeordnet und ausgebildet ist, bei Kontakt zwischen dem ersten Kontaktelement (12) und dem zweiten Kontaktelement (14) ein Signal, vorzugsweise drahtlos, auszusenden.
